# EUROPEAN PATENT SPECIFICATION

(11) **EP 1 042 097 B1**
(45) Date of publication and mention of the grant of the patent: **02.05.2003**
(21) Application number: 98936779.2
(22) Date of filing: 06.08.1998
(51) Int. Cl.: B23B 31/26, B23B 31/30

(54) **CHUCK WITH AXIAL POSITIONING DEVICE**
FUTTER MIT AXIALER POSITIONIERVORRICHTUNG
MANDRIN, POURVU D'UN DISPOSITIF DE POSITIONNEMENT AXIAL

(30) Priority: 08.08.1997 SE 9702897
(43) Date of publication of application: 11.10.2000
(73) Proprietor: AB Svenska Precisionsverktyg, 631 06 Eskilstuna (SE)
(72) Inventor: SVENSSON, Gustav, S-341 34 Ljungby (SE)
(74) Representative: Johansson Webjörn, Ingmari
(86) International application number: SE9801439
(87) International publication number: WO99007505

(56) References cited:
- SE-B- 460 264
- US-A- 3 540 748
- US-A- 3 718 339
- US-A- 4 552 370
- US-A- 5 137 289

## Description

### TECHNICAL FIELD

The present invention relates to a chuck provided with an axial positioning . device like a hydraulic chuck comprising an axially moveable rod for the tool positioning.

### BACKGROUND TECHNICS

In chucks with an axial tool positioning a desired axial distance is adjusted between the tip of the tool and a reference surface on the chuck in a presetting fixture showing a corresponding reference surface intended to interact with the reference surface on the chuck and generally connected to a projector, provided with a source of light, showing the tip of the tool and provided with a measuring scale that indicates the desired distance from the reference surface. Hydraulic chucks show at their fore end generally an elastic cylinder-shaped clamping sleeve, intended to clamp the tool inserted into the sleeve by the effect of a hydraulic pressure.

A known hydraulic chuck US-A-5,137,289 provided with a hydraulic clamping member for the clamping of tools and with a built-in axial tool positioning device comprises an axially moveable rod provided with a rack section that is connected with an adjusting axle provided with corresponding teeth and that when turning imparts an axial movement to the toothed rod. In normal use of such a chuck provided with a membrane-shaped, elastic clamping sleeve the tool gets such an insertion depth in the tool opening that the entire jacket surface of the clamping sleeve is in contact with the shank of the tool within the axial positioning zone of the chuck, i.e. even when the moveable rod in the chuck is in its outermost position, in order to not damaging the clamping sleeve by the increased pressure that is achieved in clamping the tool. If the membrane of the clamping sleeve not would get support from the shank of the tool it could be pressed out freely and get deformed and even could break.

Up to now it has not been possible to use known collets in known adjustable hydraulic chucks. The primary cause is that tools with little diameter of shank occurring in the market also show such little insertion length that the moveable rod in the chuck not can be brought in contact with the inner end of the tool. It could actually be possible to solve this problem either by creating a tool with larger insertion length than normally which would mean increased costs for the keeping of tools at the user's or to create chucks provided with moveable rods with greater axial motion which would raise the price of those chucks. These solutions are therefore not practicable.

### DESCRIPTION OF THE INVENTION

The object of the present invention has been achieved in a new collet intended for a chuck for axial tool positioning by means of an axial positioning device, the axial positioning device comprising an axially moveable rod that effects the inner end of the tool inserted into the chuck. The axial positioning device may be separate and be part of a separate fixture or positioning device or be built-in into the chuck.

The collet according to the invention comprises a collet body showing clamping members and has an external diameter adjusted to the chuck, and a cylinder-shaped tool opening with an inner diameter adjusted to the tool to be clamped in the chuck. The tool opening is part of a through opening in the collet whereby the moveable rod in the axial positioning device via a distance piece, for instance a separate piston, is brought in contact with the tools inner end inside the collet at an axial tool positioning.

When using a collet according to the invention this is arranged with such an insertion depth that the entire jacket surface of the clamping sleeve is in contact with the jacket surface of the collet whereas the tool with its minor diameter of shank shows a shorter insertion length and extends a bit into the collet. By that the moveable rod in its farthest position is allowed to insert a bit into the collet in contact with the distance piece without any risk of damaging the membrane of the clamping sleeve as the collet supports the whole of the membrane in the clamping sleeve. However, nothing hinders that the distance piece protrudes a bit at the inner end of the collet.

Further features and characteristics concerning the present invention are evident from the description to the drawings subsequently and from the claims.

### DESCRIPTION TO THE DRAWINGS

The invention is described subsequently as an example of an embodiment in connection with the enclosed drawings.

Figure 1 shows a hydraulic chuck seen in a sectional view provided with a collet according to an embodiment of the invention.

Figure 2 shows the collet according to figure 1 partly seen in a longitudinal section.

Figure 3 shows the collet according to figure 1 seen in a longitudinal section and showing a distance piece in the form of an axially moveable piston.

Figure 4 shows the collet according to figures 2 and 3 seen in a view towards its free end.

Figure 5 shows the piston of the collet seen separately.

Figure 6 shows a collet in an alternative embodiment.

The hydraulic chuck 1 as shown in the figures comprises an attachment 1.1 on a casing 2 intended to be connected to a machine tool. The casing 2 shows a cone-shaped section 2.2 in which a cylinder-shaped clamping sleeve 2.3 is mounted provided with an elastic membrane and intended to clamp a cool or a collet provided with a tool inserted into the clamping sleeve 2.3 by means of hydraulic pressure. Increase or decrease of the hydraulic pressure is done by means of a hydraulic adjusting device, not shown in the figures, comprising a piston arranged on a threaded hydraulic journal provided with a notch for instance for a hexagon spanner. The tool or the collet 3 that is placed in the clamping sleeve 2.3 is clamped by screwing of the hydraulic journal into corresponding threaded holes.

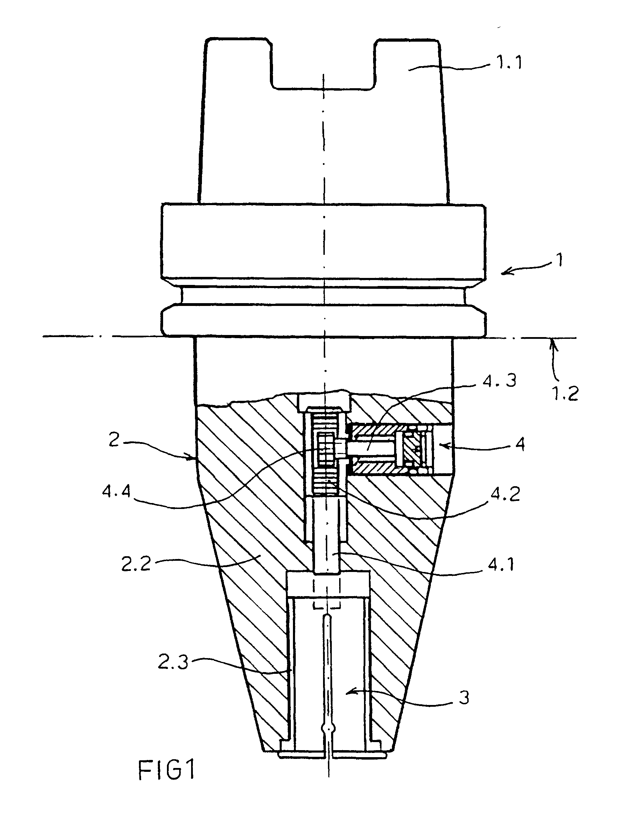

As shown in figure 1 the casing 2 is provided with an axial positioning device 4 comprising a rod 4.1 that shows a rack section 4.2 being connected to a pinion 4.4 that is arranged on a adjusting axle 4.3. The positioning axle 4.3 shows at its outer end a notch for instance for a second hexagon spanner by means of which the positioning axle 4.3 and by that the pinion 4.4 may be turned and by that move the rod 4.1.

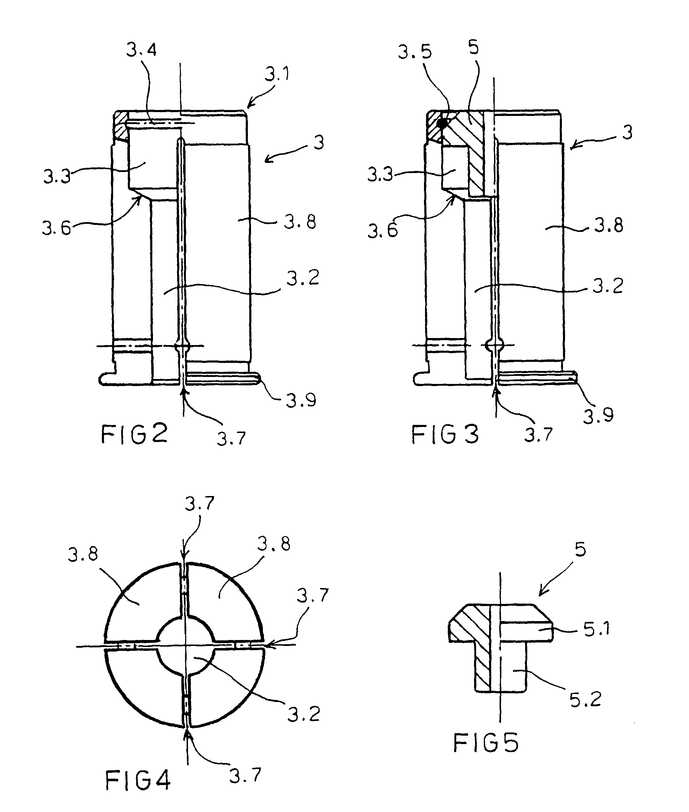

The collet 3, shown in figure 1 inserted into the former section 2 of the chuck 1 and shown in detail in figs. 2 and 3, comprises a collet body 3.1 with an external diameter adjusted to the chuck 1 and a cylindrical tool opening 3.2 with an internal diameter adjusted to the tool to be clamped in the chuck 1. The collet body 3.1 shows at its end in the chuck a cylinder-shaped tube 3.3 for a piston 5 that in its turn shows partly a piston section 5.1 running in the tube 3.3, partly a from this piston section protruding journal 5.2 with a diameter less than the piston section 5.1 that extends into the tool opening 3.2. The piston 5 is kept motion limited in the tube 3.3 by means of an in a slot arranged outer stopping ring 3.5 and an in the tube 3.3 arranged internal seat 3.6.

The collet body 3.1 is also provided with four longitudinal slots 3.7 and shows by that four collet jaws 3.8 that, when the collet 3 is put under pressure from the clamping sleeve 2.3, springs towards and clamps the tool concerned. A flange 3.9 partitioned by the slots 3.7 is arranged at the outer, free end of the collet 3 as a stop member for the insertion of the collet into the chuck 1.

In adjustment of a desired distance between the tip of a tool and a reference surface 1.2 on the chuck 1 extending in a level perpendicular to the longitudinal direction of the chuck 1 the chuck 1 is placed in a measuring fixture connected with a measuring device that measures the distance from a corresponding reference surface of the fixture. The hydraulic pressure in the chuck 1 then is zero since the piston of the hydraulic positioning device has been unscrewed by means of the first hexagon spanner. The rod 4.1 is inserted in its inner position since the second hexagon spanner has been turned into this position. The tool, that may consist of for instance an end-cutter, is placed in the clamping sleeve 2.3 and adjusted into the desired axial position by turning of the adjusting axle 4.3 by means of the second hexagon spanner. When the desired position is reached, the first hexagon spanner is turned so that the hydraulic pressure increases and clamps the collet 3 with the tool in the desired position in the clamping sleeve 2.3.

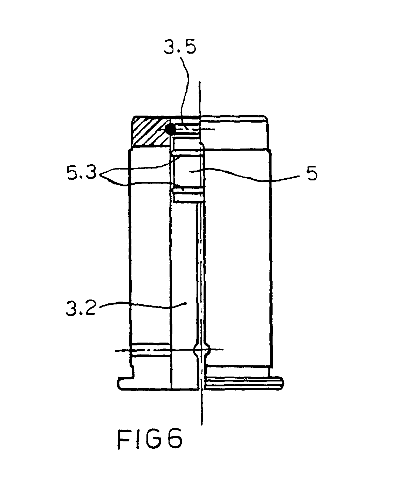

The collet 3, shown in figure 6, shows a tool opening 3.2 that extends with the same diameter all the way through the collet 3 excepted a notch in its jacket surface for a stopping ring 3.5. A piston 5 with some minor diameter than the diameter of the tool opening 3.2 is arranged therein and provided with two friction decreasing O-rings 5.3 that lie close to the jacket surface of the tool opening 3.2. In that way the piston 5 may get inserted manually by means of the tool when inserted and pushed out with the moveable rod 4.1 when positioning the tool. It is actually not necessary to arrange a stopping ring 3.5 in the tool opening 3.2 but it is a practical measure to prevent the piston 5 to be pushed out from the collet 3 by mistake when inserting the tool. The stopping ring 3.5 may alternately be replaced by an inserting collar or a fixed washer at the end of the collet 3.

It is also possible to use the collet according to the invention in a sleeve chuck provided with an axial positioning device, not shown in the figures. In such a chuck the tool is clamped with collet jaws actuated by a surrounding, axially moveable sleeve.

## Claims

1. Chuck (1) with axial tool positioning in which an axial distance between the tip of a tool and a reference surface (1.2) in the chuck (1) is set by means of an axial positioning device (4) that comprises an axially moveable rod (4.1), a collet (3) comprising a collet body (3.1), that shows collet jaws (3.8) and has an external diameter adjusted to the chuck (1) and a cylinder-shaped tool opening (3.2) adjusted to the tool to be attached in the chuck (1) and that is part of a through opening, **characterized in that** at least one distance piece (5) is arranged freely axially sliding at the inner end of the collet (3) and intended to be pushed by the moveable rod (4.1) in the axial position device (4) and to transmit an axial positioning motion between the rod (4.1) and the inner end of the tool in tool positioning, and that the distance piece (5) is moveable between two stop positions (3.5, 3.6).

2. Chuck according to claim 1, **characterized in that** the piston (5) shows a piston section (5.1) and protruding from this a journal (5.2) and that the piston section (5.1) is moveable within a tube (3.3) with a larger diameter that the diameter of the tool opening (3.2).

3. Chuck according to claim 1, **characterized in that** the distance piece (5) shows friction decreasing members (5.3) that are connected with the jacket surface of the tool opening (3.2) at its extension at the inner end of the collet (13).

4. Chuck according to claim 3, **characterized in that** the friction decreasing members (5,3) are one or more O-rings.

5. Chuck according to claim 3 or 4, **characterized in that** a stop position (3.5) is arranged at the inner end of the tool opening (3.2).

6. Chuck according to one of the claims 1-5, **characterized in that** the collet (3) is clamped hydraulically in the chuck (1) by means of a clamping sleeve (2.3) provided with an elastic membrane that is actuated by a hydraulic fluid.

## Patentansprüche

1. Futter (1) mit axialer Werkzeugpositionierung, bei dem eine axiale Distanz zwischen der Spitze eines Werkzeuges und einer Referenzfläche (1.2) in dem Futter (1) mittels einer axialen Positioniervorrichtung (4) eingestellt wird, welche eine axial bewegliche Stange (4.1), eine Spannzange (3) mit einem Spannzangenkörper (3.1), welcher Spannbacken (3.8) und einen an das Futter (1) angepassten Außendurchmesser aufweist, sowie eine an das in das Futter (1) einzusetzende Werkzeug angepasste zylinderförmige Werkzeugöffnung (3.2) umfasst, die Teil einer durchgehenden Öffnung ist, **dadurch gekennzeichnet, dass** mindestens ein Distanzstück (5) frei axial gleitend am inneren Ende der Spannzange (3) angeordnet und dazu bestimmt ist, von der beweglichen Stange (4.1) in der axialen Positioniervorrichtung (4) beaufschlagt zu werden und während der Werkzeugpositionierung eine axiale Positionierungsbewegung zwischen der Stange (4.1) und dem inneren Ende des Werkzeuges zu übertragen, und dass das Distanzstück (5) zwischen zwei Endpositionen (3.5, 3.6) beweglich ist.

2. Futter nach Anspruch 1, **dadurch gekennzeichnet, dass** der Kolben (5) einen Kolbenring (5.1) und davon ausgehend einen Zapfen (5.2) aufweist, und dass der Kolbenring (5.1) innerhalb eines Rohrs (3.3) mit einem größeren Durchmesser als dem Durchmesser der Werkzeugöffnung (3.2) beweglich ist.

3. Futter nach Anspruch 1, **dadurch gekennzeichnet, dass** das Distanzstück (5) reibungsmindemde Teile (5.3) aufweist, die mit der Mantelfläche der Werkzeugöffnung (3.2) an deren Fortsetzung am inneren Ende der Spannzange (3) in Verbindung stehen.

4. Futter nach Anspruch 3, **dadurch gekennzeichnet, dass** die reibungsmindemden Teile (5.3) ein oder mehrere O-Ringe sind.

5. Futter nach Anspruch 3 oder 4, **dadurch gekennzeichnet, dass** eine Endposition (3.5) am inneren Ende der Werkzeugöffnung (3.2) angeordnet ist.

6. Futter nach den Ansprüchen 1 bis 5, **dadurch gekennzeichnet, dass** die Spannzange (3) mittels einer Klemmuffe (2.3), welche eine durch ein hydraulisches Fluid beaufschlagte elastische Membran aufweist, in dem Futter (1) hydraulisch gespannt wird.

## Revendications

1. Mandrin (1) avec positionnement d'outil axial dans lequel une distance axiale entre l'embout d'un outil et une surface de référence (1.2) dans le mandrin (1) est établie au moyen d'un dispositif de positionnement axial (4) qui comporte une tige axialement mobile (4.1), une pince de serrage (3) comportant un corps (3.1) de pince de serrage, qui comporte des mâchoires (3.8) de pince de serrage et un diamètre externe ajusté au mandrin (1) et une ouverture (3.2) d'outil de forme cylindrique ajustée à l'outil à fixer dans le mandrin (1) et qui est une partie d'une ouverture traversant, **caractérisé en ce qu'**au moins une pièce de distance (5) est agencée librement en coulissement axial au niveau de l'extrémité interne de la pince (3) et destinée à être poussée par la tige mobile (4.1) dans le dispositif de positionnement axial (4) et pour transmettre un mouvement de positionnement axial entre la tige (4.1) et l'extrémité interne de l'outil dans le positionnement d'outils, et **en ce que** la pièce de distance (5) est mobile entre deux positions d'arrêt (3.5, 3.6).

2. Mandrin selon la revendication 1, **caractérisé en ce que** le piston (5) comporte une section (5.1) de piston et, dépassant de celui-ci, un tourillon (5.2) et **en ce que** la section (5.1) de piston est mobile au sein d'un tube (3.3) avec un diamètre plus grand que le diamètre de l'ouverture (3.2) de l'outil.

3. Mandrin selon la revendication 1, **caractérisé en ce que** la pièce de distance (5) possède des éléments de diminution de frottement (5.3) qui sont reliés à la surface de chemise de l'ouverture (3.2) de l'outil, au niveau de son extension au niveau de l'extrémité interne de la pince de serrage (13).

4. Mandrin selon la revendication 3, **caractérisé en ce que** les éléments de diminution de frottement (5.3) sont un ou plusieurs torons.

5. Mandrin selon la revendication 3 ou 4, **caractérisé en ce qu'**une position d'arrêt (3.5) est agencée au niveau de l'extrémité interne de l'ouverture (3.2) de l'outil.

6. Mandrin selon l'une quelconque des revendications 1 à 5, **caractérisé en ce que** la pince de serrage (3) est serrée hydrauliquement dans le mandrin (1) au moyen d'un manchon de serrage (2.3) pourvu d'une membrane élastique qui est actionnée par un fluide hydraulique.
